Europäisches Patentamt

(19) European Patent Office

Office européen des brevets

(11) Numéro de publication: **0 142 465**

**A2**

(12) **DEMANDE DE BREVET EUROPEEN**

(21) Numéro de dépôt: **84810441.0**

(22) Date de dépôt: **10.09.84**

(51) Int. Cl.⁴: **H 02 P 8/00**

(30) Priorité: **10.09.83 CH 4918/83**

(43) Date de publication de la demande:
**22.05.85 Bulletin 85/21**

(84) Etats contractants désignés:
**CH DE FR GB IT LI NL SE**

(71) Demandeur: **Société industrielle de Sonceboz S.A.**

**CH-2605 Sonceboz (Berne)(CH)**

(72) Inventeur: **Antognini, Luciano**
**67 avenue de la Gare**
**CH-1022 Chavannes-près-Renens(CH)**

(74) Mandataire: **Dubois, Jean René et al,**
**BOVARD SA Ingénieurs-Conseils ACP Optingenstrasse**
**16**
**CH-3000 Berne 25(CH)**

(54) Procédé pour l'optimisation du couple d'un moteur polyphasé, notamment du type pas-à-pas, et dispositif pour la mise en oeuvre de ce procédé.

(57) Le procédé consiste à appréhender l'évolution des tensions induites par la movement du rotor dans les différentes phases statoriques et à alimenter les phases dudit moteur en fonction de ces mesures, de sorte que, dans chaque phase, l'angle de déphasage entre le premier harmonique du courant produit par la source d'alimentation et la tension induite corresponde à une valeur optimale.

Le dispositif pour la mise en oeuvre de ce procédé comporte des circuits de mesure des tensions induites dans les phases et des circuits permettant d'imposer dans lesdites phases des courants dont la phase du premier harmonique correspond à une valeur optimale.

FIG. 5

EP 0 142 465 A2

Croydon Printing Company Ltd

PROCEDE POUR L'OPTIMISATION DU COUPLE D'UN MOTEUR
POLYPHASE, NOTAMMENT DU TYPE PAS-A-PAS, ET DISPO-
SITIF POUR LA MISE EN OEUVRE DE CE PROCEDE.

La présente invention se rapporte à un procédé permettant d'optimiser le couple développé par un moteur polyphasé, notamment du type pas à pas, lorsque ce dernier est alimenté par un dispositif commutant séquentiellement ses phases sur une source de tension redressée et permettant de controler dynamiquement l'angle de charge du moteur.

La présente invention se rapporte également à un dispositif mettant en oeuvre ce procédé.

Les moteurs pas à pas sont utilisés dans de nombreux dispositifs où un organe mécanique doit être déplacé d'une manière incrémentale. Toutefois, parmi les exigences le plus souvent exprimées, il y a le cas où un déplacement d'un nombre de pas important doit être effectué dans le délai le plus bref possible. Celà est le cas, par exemple, lorsque on désire déplacer le chariot d'une machine à écrire.

Dans ce genre de déplacement à haute vitesse, le moteur se comporte comme un moteur synchrone. La seule différence réside dans la démultiplication de la vitesse de rotation mécanique du rotor par rapport à la vitesse de rotation du champ magnétique tournant, créé par les phases statoriques. Bien que cette démultiplication "magnétique" soit délibérement recherchée et constitue, en fait, une particularité propre de ce genre de moteur, elle se traduit également par une grande sensibilité du moteur aux perturbations mécaniques. En effet, une légère perturbation de l'angle mécanique du rotor, lorsque ce dernier est entrainé à la vitesse synchrone, provoque une grande perturbation au niveau de l'angle électrique, dont dépend le couple synchrone du moteur.

L'expérience montre en fait que de très faibles perturbations mécaniques provoquent des phénomènes de résonance qui, à certaines vitesses, peuvent s'amplifier jusqu'à provoquer la perte du synchronisme du moteur et, par conséquent, son arrêt.

Ces phénomènes d'instabilité dynamique limitent d'une manière importante les performances de ces moteurs, obligeant l'utilisateur à n'employer, par sécurité, qu'une partie du couple théoriquement disponible. De plus, le fonc - tionnement du moteur à des vitesses correspondant à des fréquences de résonnance mécanique du système est impossible.

Un deuxième problème est constitué par la nature synchrone du couple des moteurs pas à pas. En effet, lorsque l'on désire accélérer rapidement un moteur de ce type commandé en boucle ouverte, il faut éviter qu'à un moment quelconque de la phase d'accélération, le couple demandé au moteur dépasse le couple synchrone maximal que ce dernier peut fournir sous peine de provoquer le déchrochage du moteur. Compte tenu que le couple synchrone d'un moteur dépend de nombreux paramètres et varie en fonction de la vitesse et des conditions d'alimentation, et que les perturbations et les résonnances presentes dans la chaîne cinématique à le aval du moteur ne peuvent être prédéterminées avec suffisament de précision, l'utilisateur se trouve obligé, pour assurer la sécurité du fonctionnement, à n'utiliser qu'une partie du couple synchrone disponible.

Plusieures solutions ont déjà été proposées pour assurer une plus grande stabilité dynamique à haute vitesse. Une première possibilité consiste à équiper le moteur d'un capteur de position, permettant d'observer le déplacement du rotor et de commander la commutation séquentielle des phases lorsque le rotor se trouve dans une position favorable. Bien que cette technique permette également d'eviter la perte de synchronisme, elle possède le désavantage de recourir à un élément mécanique supplémentaire, accroissant l'inertie du moteur et augmentant la complexité de la construction. De plus, de par le faible déplacement angulaire du rotor par pas, le capteur doit être aligné soigneusement avec l'axe du rotor.

Une autre solution, permettant d'éliminer partiellement les phénomènes d'instabilité dynamique, consiste à intercaler des résistances en série avec les enroulements des phases, permettant ainsi de diminuer la constante de temps électrique associée à ces dernières. L'expérience montre que le moteur possède un comportement plus stable, et parfois , les zones de fonctionnement instable peuvent être éliminées. Toutefois, le rendement énergétique est fortement diminué, et l'efficacité de cette solution dépend très fortement des paramètres du moteur.

Ces inconvénients sont évités par le procédé selon la invention qui consiste à contrôler l'angle de commutation des différentes phases du moteur, de sorte que ce dernier produise à tout instant, indépendamment de la vitesse, le couple optimal.

Le couple developpé par une phase k d'un moteur pas à pas peut en fait s'exprimer par :

$$T_k = \frac{d\psi_k}{d\alpha} \cdot i_k \qquad (1)$$

où $T_k$ représente le couple produit par cette phase k, $\psi_k$ désigne le flux associé à cette dernière, $\frac{d\psi_k}{d\alpha}$ la dérivée de ce flux par rapport à la position mécanique $\alpha$ du rotor, et $i_k$ le courant parcourant ladite phase.

En multipliant la relation 1 par la vitesse de rotation mécanique $w_m$, on obtient :

$$T_k \cdot w_m = \frac{d\psi_k}{d\alpha} \cdot \frac{d\alpha}{dt} \cdot i_k = \frac{d\psi_k}{dt} \cdot i_k = U_{mk} \cdot i_k \qquad (2)$$

Le terme $\frac{d\psi_k}{dt}$ correspond à la tension induite de mouvement présente dans la phase k et sera désignée par la suite par le terme $U_{mk}$. La relation 2 montre que le couple $T_k$ à une vitesse $w_m$ est étroitement lié à la tension induite $U_{mk}$ et au courant $i_k$ par la relation

$$T_k = \frac{1}{w_m} \cdot U_{mk} \cdot i_k \qquad (3)$$

Lorsque le moteur tourne à une vitesse constante $\omega_m$ ,la la tension induite de mouvement apparaissant dans la phase k peut être considérée comme une grandeur variant sinusoidalement dans le temps, et correspondra à la relation

$$U_{mk} = U_0 \cdot \omega_m \cdot \sin( N_r \cdot \omega_m \cdot t) \qquad (4)$$

où $N_r$ est un nombre entier lié aux paramètres constructifs du moteur, notamment du nombre de dents au rotor dans le cas d'un moteur pas à pas, et $U_0$ une constante dépendant également des paramètres du moteur.

Le courant $i_k$ , produit par l'action conjuguée de la source d'alimentation $U_{al}$ et de la tension induite $U_{mk}$ présente dans la phase k, ne sera pas purement sinusoïdal, puisque la source $U_{al}$ n'est pas elle même sinusoïdale, mais pourra être décomposé en une somme de termes harmoniques, de pulsation fondamentale $Nr.\omega_m$ . On aura donc

$$i_k(t)= i_{k1} \cdot \sin(Nr.\omega_m.t + \delta_1) + i_{k3} \cdot \sin(Nr.3\omega_m.t + \delta_3) \quad (5)$$
$$+ i_{k5} \cdot \sin (Nr.5\omega_m.t + \delta_5) + \ldots$$

où $\delta_1$ , $\delta_3$, et $\delta_5$ représentent les déphasages des différents termes harmoniques par rapport à la tension induite $U_{mk}$.

Comme il sera expiqué en détail plus loin , le couple synchrone correspondant à la vitesse $\omega_m$ développé par la phase k correspondra à la valeur moyenne de l'expression 3 sur une période électrique , et pourra s'exprimer par la relation suivante

$$\overline{T}_k = \frac{N_r}{2\pi\omega} \int_0^{\frac{2\pi}{N_r\omega}} U_0 \cdot \sin(Nr.\omega_m t) \cdot i_{k1} \cdot \sin(Nr.\omega_m t + \delta_1) \cdot dt \quad (6)$$

Cette dernière relation montre clairement que le couple synchrone $\overline{T}_{ks}$ dépend directement de la norme $i_{k1}$ et de la phase $\delta_1$ du premier harmonique du courant $i_k$, qui en est l'onde fondamentale.

La présente invention a donc pour but l'optimisation du couple synchrone d'un moteur polyphasé, ce qui est obtenu par le contrôle de l'angle de déphasage existant entre la tension induite de mouvement induite dans une phase et la composante vibratoire fondamentale du courant circulant au travers de cette même phase

par la variation de l'angle de commutation associé à ladite phase.

La méthode et l'agencement permettant d'utiliser la totalité du couple synchrone développable par un moteur polyphasé, lors d'une rampe d'accélération ou de décélération par exemple, constituent des réalisations particulièrement performantes de l'objet de la présente invention.

Le procédé permettant de contrôler la phase de la vibration fondamentale (dénommée aussi par la suite "premier harmonique") du courant circulant dans une phase déterminée par la mesure des tensions induites de mouvement apparaissant dans les différentes phases du moteur, est aussi un aspect de la présente invention, qui rend ses performances particulièrement intéressantes.

Enfin, l'emploi, pour déterminer l'évolution des tensions induites de mouvement apparaissant dans les phases du moteur, du procédé basé sur la saisie (ou la mesure) de l'onde de courant parcourant une phase et de la tension régnant à ses bornes constitue, en liaison avec les autres particularités essentielles de l'invention, une mesure technique des plus adéquate, faisant comme telle partie de l'invention.

Il convient de mentionner ici l'exposé EP-A-82-0060806 du 22.9.82 où se trouve proposé un dispositif par lequel on cherche principalement à réduire la consommation d'un moteur pas à pas. Ce dispositif, pour atteindre ce but réalise une reconstitution, par échantillonnage, de la tension induite dans le bobinage d'un moteur pas à pas. Par ce système de reconstitution, on appréhende effectivement l'évolution de la tension induite, sans devoir procéder à des coupures de courant ou recourir à des artifices similaires. Toutefois, cet exposé antérieur ne propose nullement l'utilisation de sa méthode de "reconstitution de l'évolution de la tension induite" en combinaison avec des moyens pour optimiser le couple développé par un moteur pas à pas polyphasé. Une telle combinaison de moyens serait donc tout à fait inédite, permettant d'atteindre des avantages insoupçonnés dans l'exposé européen précédemment mentionné.

On note d'autre part que la demande de brevet copendante EUR 84 810 253.4, US-A-611,302, JP 59-103 761 ayant même inventeur et même titulaire ou assigné, mentionne des publications antérieures qui ressortent du même domaine technique général. Toutefois, elles ignorent toutes, sans l'ombre d'un doute, les caractères et performances essentielles de la présente invention, raison pour laquelle elles sont ici hors de cause.

Les caractéristiques et les avantages de l'invention seront mieux compris à la lecture de la description qui va suivre, description faite en référence au dessin dans lequel:

la fig. 1 représente schématiquement un moteur polyphasé, notamment du type pas à pas,

la fig. 2 représente le schéma électrique équivalent d'une phase du moteur de la figure 1,

la fig. 3 illustre l'évolution dans le temps dela tension d'alimentation appliquée à une phase du moteur, ainsi que la tension induite de mouvement présente dans cette dernière,

la fig. 4 est une représentation au moyen de phaseurs tournants des grandeurs électriques associées au schéma de la figure 2.

-la figure 5 est une deuxième représentation par
phaseurs tournants des grandeurs électriques
associées au schéma de la figure 2

-la figure 6 représente un schéma de principe de
un mode de réalisation selon l'invention dans le
cas d'un moteur biphasé

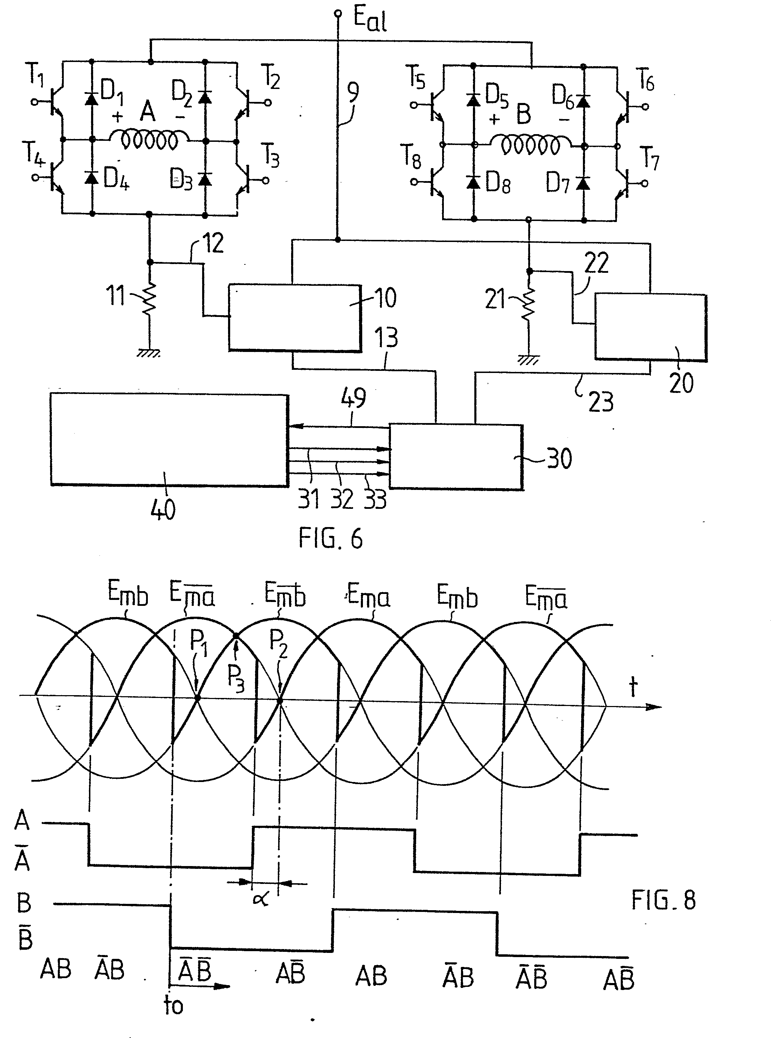

-la figure 7 représente un exemple de réalisation
d'une partie de circuit portant la référence 30
à la figure 6

-la figure 8 représente les tensions induites présentes dans les phases du moteur lorsque ce dernier
est entraîné à une vitesse constante, ainsi que la
séquence d'alimentation des phases

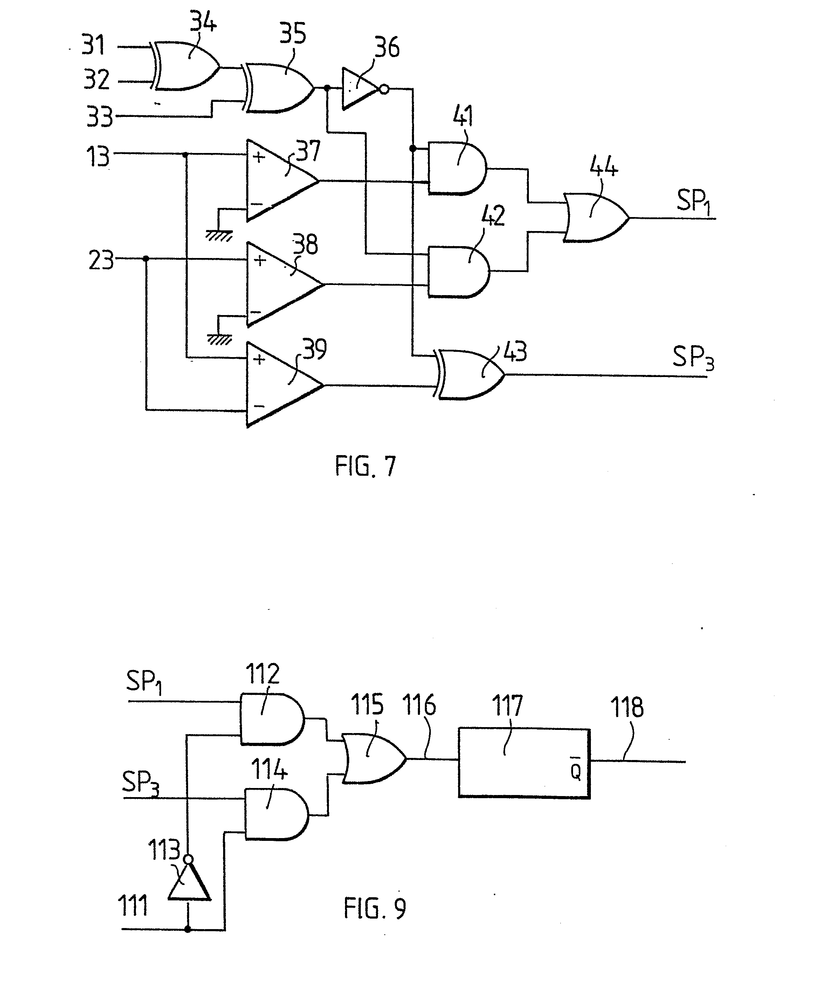

-la figure 9 illustre un exemple de réalisation de
une deuxième partie du circuit portant la référence
30 à la figure 6

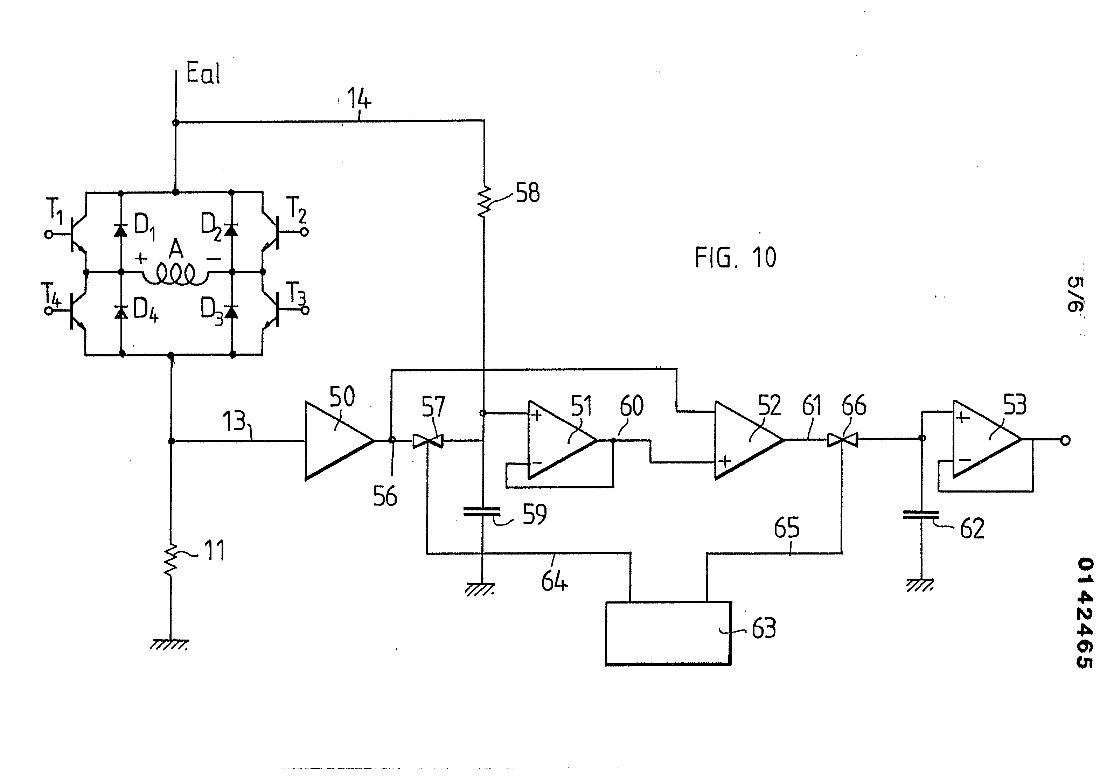

-la figure 10 est un schéma d'un exemple de réalisation des circuits de mesure de la tension induite
portant les références 10 et 20 à la figure 6

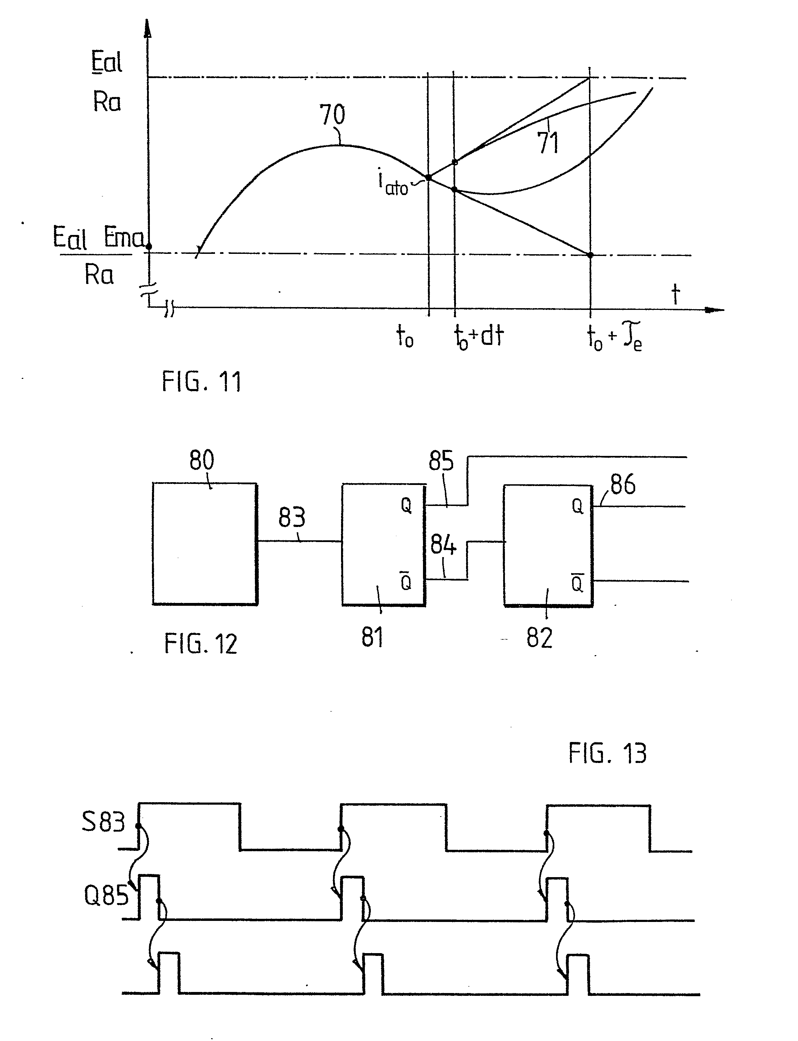

-la figure 11 est un diagramme permettant d'expliquer le fonctionnement du circuit de la figure 10

-la figure 12 représente un sous-ensemble du circuit représenté à la figure 10

-la figure 13 est un diagramme permettant d'expliquer le fonctionnement du circuit représenté à la
figure 12

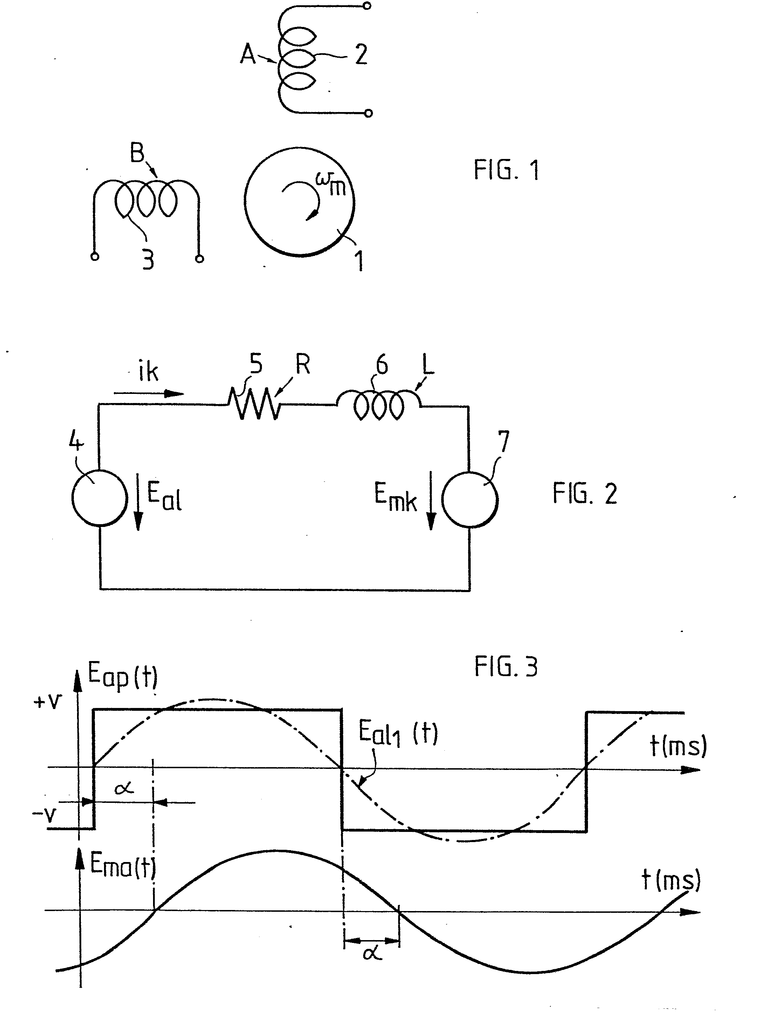

A la figure 1 est représenté schématiquement un moteur pas à pas biphasé. Ce moteur est utilisé ici en tant qu'exemple non limitatif, et le procédé selon l'invention peut être appliqué à des moteurs avec un nombre de phases différent de deux, ainsi qu'à des moteurs du type synchrone ou des moteurs dits à courant continu sans collecteur. Le moteur de la figure 1 comporte un rotor portant la référence 1, couplé magnétiquement à deux phases A et B, portant les références 2 et 3, décalées de 90 degrés électriques l'une par rapport à l'autre.

La figure 2 représente le schéma électrique équivalent associé à une phase dudit moteur, désignée par la suite par phase k. La référence 4 désigne la source de tension alimentant ladite phase, alors que les références 5 et 6 désignent respectivement la résistance et l'inductance de la phase considérée. La source de tension induite de mouvement présente dans la phase considérée est designée par la référence 7. L'équation de tension de la phase k, compte tenu des conventions de signes définies à la figure 2, peut donc s'écrire:

$$U_{al} = R.i_k + L\frac{di_k}{dt} + U_{mk} \tag{7}$$

$i_k$ désignant le courant parcourant la phase. En multipliant cette dernière expression par le courant $i_k$ et un un intervalle de temps dt infiniment court, nous obtenons la relation suivante:

$$U_{al}i_k dt = Ri_k^2 dt + i_k L\frac{di_k}{dt}dt + U_{mk}i_k dt \tag{8}$$

Ces quatre termes décrivent entièrement les échanges de énergie intervenant dans le système. Le terme $U_{al}.i_k.dt$ correspond à la puissance instantanée delivrée par la source $U_{al}$ à la phase. Le terme $R.i_k^2.dt$ représente les pertes par effet Joule dans l'enroulement, alors que le terme $i_k.L\frac{di_k}{dt}dt$ correspond à la variation de l'énergie magnétique accumuléé dans le circuit magnétique associé à la phase. Le dernier terme $U_{mk}.i_k.dt$ constitue la partie de la puissance électrique convertie en puissance mécanique

Cette conversion de puissance est également montrée par la relation 3, que nous rappellerons ici

$$T_k \cdot w_m = U_{mk}(t) \cdot i_k(t) \qquad (9)$$

Le couple $T_k$ produit par une phase k est donc étroitement lié à la tension induite $U_{mk}$ présente dans cette même phase , ainsi qu'au courant $i_k$ la parcourant. La tension induite apparaissant par exemple dans la phase A du moteur lorsque ce dernier est entrainé à la vitesse de rotation mécanique w peut être décrite par la relation suivante:

$$U_{ma}(t) = U_o \cdot w_m \cdot \sin(Nr \cdot w_m \cdot t) \qquad (10)$$

où $U_o$ représente une constante dépendant des données constructives du moteur et Nr correspond aux nombre de dents rotoriques du moteur. Dans notre cas, la pulsation électrique $w_e$ est liée à la vitesse de rotation mécanique par la relation $w_e = Nr \cdot w_m$ .

La figure 3 représente un diagramme temporel de la tension appliquée à la phase A du moteur. Un dispositif permettant de réaliser cette source de tension sera décrit en détail plus loin. La tension induite $U_{ma}(t)$ apparaissant dans la phase A est également représentée. On remarquera que cette tension induite $U_{ma}$ est déphasée d'un angle par rapport au premier harmonique de la tension $U_{a1}(t)$. Comme la tension induite de mouvement $U_{ma}$ est étroitement liée à la position du rotor, comme le montre la relation(10) , l'angle de déphasage $\alpha$ précité dépend directement de la position du rotor à l'instant de la commutation de la source $U_{a1}$. Cette position du rotor à la commutation sera désignée par la suite par angle de commutation.

On va maintenant montrer que le couple produit par le moteur est fortement influencé par l'angle de commutation, et nous allons déterminer un critère permettant de choisir un angle de commutation optimal. Le courant $i_a(t)$ parcourant la phase A peut facilement être déterminé à l'aide du schéma équivalent de la figure 2. En effet, tous les éléments de ce circuit étant linéaires, il est possible de déterminer le courant produit par chaque source et d'en dédui-

re le courant total $i_a(t)$. Si $i_{ma}(t)$ désigne le courant produit par la tension induite $U_{ma}$ et $i_{al}(t)$ le courant provoqué par la source d'alimentation $U_{al}$, le courant total $i_a(t)$ pourra s'écrire:

$$i_a(t) = i_{ma}(t) + i_{al}(t) \qquad (11)$$

D'après la relation 10, la tension induite $U_{ma}$ présente lorsque le rotor est entrainé à la vitesse mécanique constante $\omega_m$ peut être considérée comme une tension purement sinusoïdale de pulsation $\omega_e = Nr.\omega_m$. Le courant induit $i_m(t)$ comportera donc un seul harmonique, également de pulsation $\omega_e$, et possédera un déphasage $\beta$ qui répondra à la relation

$$\beta = \text{arc tan} \left(\frac{L.\omega_e}{R}\right) \qquad (12)$$

Nous aurons donc

$$i_{ma}(t) = i_{ma1}. \sin(Nr.\omega_m.t - \beta) \qquad (13)$$

La tension d'alimentation $U_{al}$ pouvant être décomposée en une somme de différents termes harmoniques de pulsation $\omega_e$, $3\omega_e$, $5\omega_e$ ..., le courant $i_{al}(t)$ pourra également être représenté par une série de termes harmoniques. On aura donc:

$$i_{al}(t) = i_{al1}.\sin(Nr.\omega_m.t + \delta_1) + i_{al3}.\sin(3Nr.\omega_m.t + \delta_3)$$
$$+ i_{al5}.\sin(5Nr.\omega_m.t + \delta_5) + ... \qquad (14)$$

où $i_{alj}$ représente l'amplitude du j-ème harmonique, et $\delta_j$ son déphasage par rapport à la tension induite $U_{ma}(t)$.

La contribution au couple moyen de la phase A peut se calculer en considérant la valeur moyenne de l'expression 3 pendant une période électrique, et pourra s'écrire:

$$\overline{T}_a = \frac{Nr}{2\pi\omega} \int_0^{T_e} U_{ma}(t) . i_a(t) .dt \qquad (15)$$

En remplaçant $U_{ma}(t)$ et $i_a(t)$ par les expressions 10, 11, 13 et 14, nous obtenons:

$$\overline{T}_a = \frac{Nr}{2\pi\omega} \int_0^{T_e} U_o .\omega.\sin(Nr\omega_m t).\left[i_m \sin(Nr\omega_m t + \delta_1) \right. \qquad (16)$$
$$\left. + i_{al1}\sin(Nr\omega_m t + \delta_3) + i_{al3}\sin 3Nr\omega_m t + \delta_5) + . \right].dt$$

Comme l'intégrale du produit de deux termes harmoniques de pulsation différente est nulle sur une période électrique, cette dernière expression se simplifie considérablement. Le couple moyen fourni par la phase A pendant une période électrique peut donc s'exprimer, après quelques calculs, par :

$$\overline{T}_a = \frac{N_r}{2\pi w_e} \int_0^{\frac{2\pi}{w_e}} U_e w \sin(N_r w_m \cdot t) \cdot \left[ i_m \sin(N_r w_m t - \beta) + i_{al1} \sin(N_r w_m t - \delta_3) \right] dt \quad (17)$$

Cette expression admet pour solution

$$\overline{T}_a = \frac{N_r}{2\pi w_e} \left[ \frac{U_e w_m i_{a1} \cos(\delta_1)}{2} + \frac{U_e w_m i_m \cos(\beta_1)}{2} \right] \quad (18)$$

Cette dernière relation montre que le couple moyen $\overline{T}_a$ développé par la phase A comporte en fait la somme de deux termes de nature différente. Le premier est dû à l'interaction de la tension induite avec le premier harmonique de courant $i_{al1}$, alors que le deuxième résulte de l'interaction de la tension induite avec le courant induit $i_m$ lui-même. Ce dernier terme apporte une contribution fixe à la vitesse $w_m$, puisque ni sa norme $i_m$ ni sa phase $\beta_m$ du courant induit peuvent être modifiés. Le premier terme dépend par contre directement de la norme $i_{al1}$ et de la phase $\delta_1$ du premier harmonique de courant $i_{al}$, imposé par la tension d'alimentation $U_{al}$. En modifiant la phase de la tension d'alimentation par rapport à la tension induite il est donc possible de modifier directement la phase du premier harmonique de courant $i_{al}$. En se référant à la figure 3, on remarquera que la phase de la tension d'alimentation est étroitement liée à l'angle de commutation $\alpha$. En agissant judicieusement sur ce dernier, il est donc possible de controler l'angle de déphasage $\delta_1$ du premier harmonique de courant.

Tous les termes intervenant dans l'expression 17 étant de même pulsation électrique $w_e$, il est possible de représenter le comportement du circuit équivalent associé à la phase par des phaseurs tournants.

En posant:

$$\underline{U}_{ma} = U_0 . \omega_m . e^{j\omega_e t} \qquad (19)$$

$$\underline{I}_m = i_m . e^{j(\omega_e t - \beta_m)} \qquad (20)$$

$$\underline{U}_{al1} = U_{al1} . e^{j(\omega_e t + \alpha)} \qquad (21)$$

$$\underline{I}_{al1} = i_{al1} . e^{j\omega t + \delta_1} \qquad (22)$$

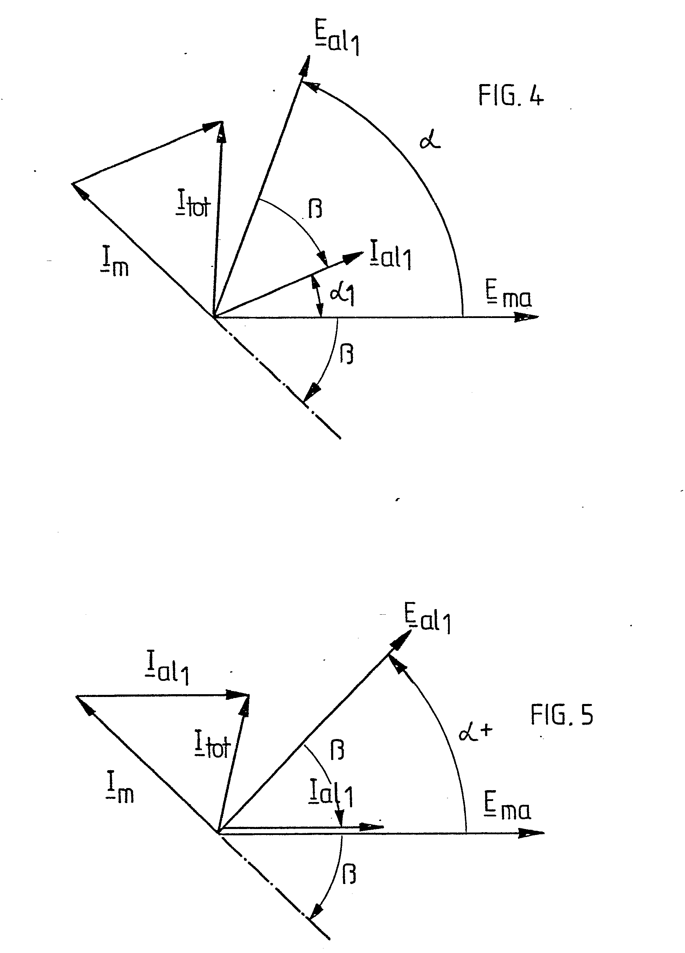

La figure 4 illustre le comportement du circuit de la figure 2 lorsque l'on considère uniquement les termes harmoniques de pulsation $\omega_e$. La phase de la tension induite $\underline{U}_{ma}$ est choisie en tant que référence. Cette même tension induite $\underline{U}_{ma}$, de pulsation $\omega_e$, provoque la circulation du courant induit $\underline{I}_m$. De par la convention de signe choisie à la figure 2, ce courant $\underline{I}_m$ possède un déphasage

$$\beta_m = \beta + \pi \qquad (23)$$

avec

$$\beta = \text{arc tan} \left( \frac{L\omega}{R} \right) \qquad (24)$$

La contribution au couple $\overline{T}_a$ de ce terme est toujours négative puisque la phase $\beta_m$ est comprise entre $\pi$ et $\frac{3\pi}{2}$. A cette même figure 4 est également représenté le phaseur $\underline{U}_{al1}$, associé au premier harmonique de la tension d'alimentation $U_{al}$. De par la présence d'un angle de commutation $\alpha$, représenté à la figure 3, différent de zéro ce phaseur possède une avance de phase par rapport à la tension induite équivalente à cet angle $\alpha$. Le premier harmonique du courant $\underline{I}_{al1}$, provoqué par la source $U_{al}$ possèdera donc une phase qui pourra s'exprimer par:

$$\delta_1 = \alpha - \beta \qquad (25)$$

où $\alpha$ et $\beta$ répondent aux définitions précédentes.

En nous référant à la relation 15, nous remarquerons que le couple correspondant au courant d'alimentation dépend directement de la phase de ce dernier . En effet, les normes des phaseurs $\underline{U}_{al1}$ et $\underline{I}_{al1}$ ne sont pas fonction de l'angle de commutation $\alpha$. Le couple développé par l'interaction de la tension induite $U_{ma}$ et le courant d'alimentation sera donc maximal lorsque $\cos(\delta_1)=1$ , ce qui est le cas pour $\delta_1 = 0$ . Comme $\delta_1$ dépend directement de l'angle de commutation $\alpha$ de par la relation 25, l'angle de commutation $\alpha_+$ permettant de maximiser le couple développé par le moteur vaudra donc:

$$\alpha_+ = \text{arc tan } (\frac{L\omega}{R}) \qquad\qquad (25)$$

La figure 5 représente les phaseurs associés aux variables électriques du schéma équivalent de la figure 2 lorsque l'angle de commutation est optimal. On remarquera que dans ce cas le premier harmonique du courant d'alimentation $\underline{I}_{al1}$ est en phase avec le phaseur $\underline{U}_{ma}$ représentant la tension induite $U_{ma}$.

La même approche peut être utilisée lorsque l'on désire obtenir un couple de freinage maximal. Dans ce cas, la condition à remplir sera $\cos(\delta_1) = -1$ . L'angle de commutation $\alpha_-$ permettant de remplir cette condition pourra s'exprimer:

$$\alpha_- = \text{arc tan } (\frac{L\omega}{R}) - \pi \qquad\qquad (27)$$

Une des caractéristiques de l'invention consiste donc à contrôler le couple développé par le moteur par la variation de l'angle de déphasage entre le premier harmonique du courant produit par la source d'alimentation et la tension induite dans chaque phase. On remarquera également que le premier harmonique du courant $i_{al1}$ produit par l'alimentation ne correspond pas au premier harmonique du courant circulant dans la phase, puisque ce dernier correspond à la superposition des courants $i_{al}$ et $i_m$. Ce fait est illustré par la figure 5, où l'on remarquera que la phase du courant total $\underline{I}_{tot}$ diffère de la phase du courant $\underline{I}_{al}$.

La phase $\delta_1$ du courant d'alimentation $\underline{I}_{al}$ pourra facilement être contrôlée, comme il sera montré plus loin dans la description du mode de réalisation selon l'invention, par la variation de l'angle de commutation $\alpha$.

A la figure 6 est représenté un schema de principe du mode de réalisation préféré de l'invention, dans le cas où le moteur considéré est un moteur pas à pas biphasé. Les phases A et B du moteur sont alimentées par deux ponts comportant respectivement les transistors $T_1$, $T_2$, $T_3$, $T_4$ et les transistors $T_5$, $T_6$, $T_7$ et $T_8$. Ces transistors sont commandés par un circuit portant la référence 40. Le pont associé à la phase A permet d'alimenter cette dernière par une tension positive lorsque les transistors $T_1$ et $T_3$ sont conducteurs et les transistors $T_2$ et $T_4$ sont bloqués, et par une tension négative, lorsque les transistors $T_2$ et $T_4$ sont à leur tour conducteurs et les transistors $T_1$ et $T_3$ sont bloqués. Les diodes $D_1$ à $D_8$ permettent d'éliminer les surtensions apparaissant à la commutation du pont respectif. L'alimentation de la phase A par une tension d'alimentation positive, selon la convention de signe représentée à la figure 6, sera désignée par A, alors que l'alimentation de ladite phase par une tension négative sera désignée par $\overline{A}$. Une convention analogue pourra être définie pour la phase B.

Le circuit de commande des deux ponts, portant la référence 40, imposera la séquence AB-$\overline{A}$B-$\overline{A}\overline{B}$-A$\overline{B}$-AB lors d'une rotation dans le sens horaire du moteur, et la séquence AB-A$\overline{B}$-$\overline{A}\overline{B}$-$\overline{A}$B-AB lorsqu'une rotation en sens inverse est désirée. Le courant parcourant les phases A et B traversent les résistances de mesure 11 et 21, de faible valeur.

Deux circuits de mesure de la tension induite par la rotation du rotor, et dont le fonctionnement sera décrit en détail plus loin, sont associés aux phases A et B du moteur et sont désignés par les références 10 et 20. Ces deux circuits reçoivent à leur entrée le signal S, correspondant à la tension totale appliquée aux deux phases, ainsi que les signaux 12 et 22, correspondant à la mesure des courants parcourant les phases A et B.

Ces deux circuits de mesure 10 et 20 délivrent à leur sortie deux signaux 13 et 23, proportionnels aux tensions induites $U_{ma}$ et $U_{mb}$ mesurées dans les phases A et B.

Le circuit de contrôle 30 reçoit sur son entrée ces deux signaux 13 et 23, ainsi que deux signaux logiques 31 et 32 correspondant à la séquence d'alimentation des phases A et B ainsi qu'un signal logique 34 correspondant au sens de marche du moteur.

Le rôle du circuit 30 consiste à analyser l'information contenue dans les deux signaux de tension induite $U_{ma}$ et $U_{mb}$ mesurés par les circuits 10 et 20, et à déterminer l'instant de commutation des phases.

La figure 7 représente un exemple de réalisation de ce circuit 30, et son fonctionnement détaillé va être expliqué à l'aide des diagrammes de la figure 8. A cette figure sont représentées les tensions induites $U_{ma}$ et $U_{mb}$ apparaissant dans les phases A et B lorsque le moteur est activé à une vitesse w . Par une particularité des circuits de mesure 10 et 20, qui sera expliquée en détail plus loin, le signe de la tension induite mesurée est inversé dans les états A et B. Seulement deux des quatres signaux $U_{ma}, U_{mb}, U_{\overline{ma}}, U_{\overline{mb}}$ sont donc observables simultanément, selon la séquence d'alimentation des phases.

Supposons maintenant qu'à l'instant $t_0$, alors que le moteur se trouve dans la position $\alpha_0$, on ait commuté les phases de la séquence $\overline{A}B$ à la séquence $\overline{A}\overline{B}$, et que l'on doive déterminer l'instant optimal $t_1$ de commutation successif permettant de passer de la séquence $\overline{A}B$ à la séquence $A\overline{B}$. Comme on l'a montré précédemment, la tension d'alimentation doit posséder une avance de phase par rapport à la tension induite de la phase considérée comprise entre 0 et 90 degrés électriques, comme le montre la relation 25. Les points portant la référence $P_1$ et $P_2$ à la figure 8 étant espacés de 90 degrés électriques, la commutation optimale doit toujours intervenir entre ces deux points.

Nous remarquerons que deux points particuliers des signaux $U_{\overline{ma}}$ et $U_{\overline{mb}}$ se prêtent particulièrement bien à une détection simple. Il s'agit du point $P_1$ lui-même, puisqu'il est caractérisé par $U_{\overline{mb}}=0$, ce qui correspond à une avance

BAD ORIGINAL

de phase de 90 degrés électriques par rapport à la tension induite dans la phase A, et du point portant la réféence $P_3$, répondant à la condition $U_{\overline{me}} = U_{\overline{mb}}$, et correspondant à une avance de 45 degrés électriques par rapport au point $p_2$.

Bien que d'autres points puissent être détectés en comparant l'un des deux signaux $U_{\overline{me}}$ ou $U_{\overline{mb}}$ à une grandeur de référence, la détection des points $P_1$ et $P_3$ offre l'avantage de ne pas dépendre de l'amplitude de la tension induite, et, par conséquent, est indépendante de la vitesse du rotor.

La figure 7 représente un schéma de principe d'un dispositif permettant de détecter les points $P_1$ et $P_3$. Ce circuit reçoit sur son entrée les trois sigaux logiques 31, 32 et 33 définissant la séquence d'alimentation des phases A et B, ainsi que le sens de rotation du moteur. Dans le cas cité plus haut, les signaux 31 et 32 se trouvent à l'état logique "o" (séquence $\overline{AB}$), et le signal 33, correspondant au sens de rotation à l'état logique "1". La sortie de la porte OU exclusif portant la référence 34 se trouve à l'état logique "o", alors que la deuxième porte OU exclusif portant la référence 35 se trouve à l'état "1". L'inverseur 36 a pour unique rôle de fournir un signal complémentaire au signal délivré par la porte 35. Le comparateur portant la référence 38 reçoit sur son entrée non-inverseuse le signal 23, correspondant à la mesure de la tension induite dans la phase B. Par la séquence d'alimentation actuelle (séquence $\overline{AB}$), ce signal 23 correspond au signal $U_{\overline{mb}}$ représenté à la figure 8. L'entrée inverseuse de ce même comparateur 38 est reliée à la terre. Le comparateur 38, ainsi que les comparateurs 37 et 39 sont agencés de manière à fournir à leur sortie un signal logique "1" lorsque la tension sur leur entrée positive est supérieure à la tension sur leur entrée négative, et à délivrer un signal logique "o" dans le cas inverse.

La sortie du comparateur 38 se trouve donc à l'état logique "o" aussi longtemps que le signal $U_{\overline{mb}}$ est inférieur à zéro. Lorsque cette tension $U_{\overline{mb}}$ change de signe et devient positive, la sortie du comparateur 38 passe à l'état "1". A ce moment, les deux entrées de la porte ET portant la référence 42 etant à "1", la sortie de cette porte 42 ainsi que la sortie de la porte OU portant la référence 44 passent à l'état logique "1".L'état du comparateur 37, analysant la la polarité du signal $U_{\overline{mã}}$, n'affecte pas le signal de sortie de la porte OU 44, désigné par la référence $SP_1$, puisque la entrée de la porte ET 41 reliée à l'inverseur 35 se trouve à l'état "o". La transition de l'état "o" à l'état "1" du signal $SP_1$ correspond donc au passage par zéro de la tension $U_{mb}$ et permet de détecter le point $P_1$. Lorsque le moteur est alimenté dans la séquence $A\overline{B}$, ce sera le résultat fourni par le comparateur 37, analysant la tension induite $U_{mã}$, qui se trouvera à la sortie de la porte OU 44 et constituer le signal $SP_1$.

La détéction du point $P_3$ dans la séquence d'alimentation AB se fait d'une manière analogue en utilisant simultanément les deux signaux $U_{\overline{mã}}$ et $U_{\overline{mb}}$ qui se trouvent à l'entrée du comparateur 39. La sortie de ce dernier se trouve donc à le état "o" tant que la condition $U_{\overline{mã}} > U_{\overline{mb}}$ est remplie,ce qui est le cas tant que le rotor est situé entre les points $P_1$ et $P_3$. Lorsque ce dernier point est atteint, la tension $U_{\overline{mã}}$ devient inférieure à la tension $U_{\overline{mb}}$. La sortie du comparateur 39 passe donc de l'état "o" à l'état "1". Comme la deuxième entrée de la porte OU exclusif 43, reliée à la sortie de l'inverseur 35, se trouve à l'état "o", la sortie de cette porte 43 passe également de l'état "o" à l'état "1". La porte OU exclusif 43 permet de tenir compte du fait que la détection du point $P_3$ dans les différentes séquences d'alimentation correspond à un passage de "o" à "1" pour les séquences AB et $\overline{AB}$, et à un passage de "1" à "o" de la sortie du comparateur 39 dans les séquences $\overline{A}B$ et $A\overline{B}$. Dans ces deux derniers cas, la porte OU 43 agit en tant qu'inverseur, de sorte que la détection du point $P_3$ corresponde toujours à une transition de "o" à "1", quelle que soit la séquence d'alimentation considérée. Le signal à la sortie de la porte 43 sera désigne par la suite par $SP_3$.

Le circuit de la figure 7 permet donc de détecter, à partir des mesures des tensions induites effectuées dans les phases du moteur, les points $P_1$ et $P_3$, représentés à la figure 6correspondant à des points de commutation permettant de

obtenir des avances de phase de 90 et 45 degrés électriques.

Le signal de détection délivré par le circuit de la figure 7 et portant la référence $SP_3$ , et qui correspond à une avance de phase de 45 degrés, peut être utilisé lorsque le moteur est activé à des vitesses faibles. Le deuxième signal désigné par $SP_1$ , peut être utilisé pour commuter les phases lorsque le moteur est activé à haute vitesse, et que l'avance de phase nécéssaire dépasse 45 degrés électriques.

La relation 25 montre toutefois que l'angle de commutation optimal peut prendre des valeurs comprises entre 0 et 90 degrés électriques. Des angles de commutation différents de 45 et 90 degrés électriques s'obtiennent facilement en introduisant un retard entre le moment de la détection du point $P_1$ ou du point $P_3$ et le moment où la commutation effective intervient. Si cet intervalle de temps est désigné par $\Delta T$, l'angle électrique correspondant à ce laps de temps lorsque le rotor est animé de la vitesse w vaudra:

$$\Delta \alpha = \Delta T . Nr . w \tag{28}$$

La figure 9 représente un schema de principe d'un dispositif permettant de contrôler l'angle de commutation effectif à partir des deux signaux de détéction $SP_1$ et $SP_3$ fournis par le circuit de la figure 7. En plus de ces deux derniers signaux, ce circuit reçoit sur son entrée un signal logique 111. Les portes logiques ET portant les références 112 et 114, ainsi que l'inverseur portant la référence 113 sont interconnectés de telle sorte que le signal apparaissent à la sortie de la porte OU 115 corresponde au signal $SP_1$ lorsque le signal de commande 111 est à l'état "0", et au signal $SP_3$ lorsque ce dernier est à l'état logique "1". Ce signal de commande permet donc de séléctionner l'un des deux signaux $SP_1$ ou $SP_3$. Ce signal de commande 111 pourrait être fourni, à titre d'exemple, par un microprocesseur qui contrôlerait les différents déplacements effectués par le moteur.

Le signal choisi , présent à la sortie 115 de la porte OU 115 est appliqué à l'entrée d'une bascule monostable 117. La sortie $\bar{Q}$ de cette bascule monostable, portant la référence 118, est mise à l'état "0" lorsque l'entrée de la bascule passe de "o" à "1", et revient à l'état "1" après qu'un délai de temps  T se soit écoulé. Ce délai de temps est choisi de sorte que la transition de "o" à "1" de la sortie de  la bascule 117 se produise à l'instant correspondant à l'angle de commutation idéal.

La bascule 117 peut être avantageusement réalisée par une bascule monostable programmable par microprocesseur. Ce genre de bascule comporte en fait un compteur qui décompte, chaque fois qu'elle est activée par un signal sur son entrée, un nombre introduit préalablement par le microprocesseur. Le délai correspondant au décomptage de ce nombre est donc proportionnel à ce dernier. Le microprocesseur peut ainsi introduire un nombre dépendant de la vitesse du moteur, de sorte que l'angle de commutation effectif respecte toujours la relation 26.

Le circuit 30 de la figure 6, permettant d'engendrer le signal 49 permettant de commuter les phases à l'instant optimal , est donc constitué des deux circuits représentés aux figures 7 et 8. La sortie $\bar{Q}$ de la bascule 117 constitue le signal 49 de la figure 6. Le circuit de commande des phases portant la réf. 40   peut être réalisé par un circuit logique réalisant les séquences de commande des transistors $T_1$ à $T_6$ conformément à la description faite précédemment. Ces transistors peuvent être directement commandés par le microprocesseur contrôlant le moteur. Ces deux modes de réalisation étant connus dans l'art antérieur, il ne feront pas le objet d'une description détaillée.

On va maintenant décrire, à l'aide de la figure 10, un exemple de réalisation des circuits de mesure de la tension induite de mouvement portant les références 10 et 20. Ces deux circuits étant en fait identiques, le fonctionnement détaillé sera expliqué en relation au circuit 10. Il suffit cependant de remplacer les connections portant les références 12 et 13 par les connections 22 et 23 pour obtenir le fonctionnement détaillé du circuit 20.

Supposons, à titre d'exemple, que la phase A soit alimentée par une tension d'alimentation positive. Dans ce cas les transistors $T_1$ et $T_3$ sont conducteurs, alors que les transistors $T_2$ et $T_4$ sont bloqués. Le courant en provenance de la source d'alimentation $U_{al}$ traverse successivement le transistor $T_1$, la phase A dans le sens défini positif, le transistor $T_3$ et la résistance de mesure 11. La valeur R11 de cette résistance est généralement de faible valeur, et la tension U11 recueillie aux bornes de cette résistance est appliquée, au travers de la connection 13, à l'amplificateur 50. Ce dernier produit donc à sa sortie 56 une tension U56 proportionnelle au courant circulant dans la phase A. Le gain de l'amplificateur 50 est choisi de sorte que la tension U56 à sa sortie soit égale à la tension $U_{al}$, appliquée à la phase A et aux éléments en série avec cette dernière, lorsque le courant parcourant la phase A est égal à $U_{al}/R_a$, où $R_a$ représente la somme des résistances en série présentes dans le circuit associé à la phase A, comprenant notamment la résistance 11 ainsi que la résistance R de l'enroulement A lui-même.

La sortie de l'amplificateur 50 est reliée à la porte de transmission 57, ainsi qu'à l'entrée inverseuse de l'amplificateur 51, monté en suiveur de tension. La résistance 58 et la capacité 59 sont également connectées à l'entrée non-inverseuse de l'amplificateur 51. La deuxième borne de la résistance 58 est reliée à la connection 14, alors que la deuxième borne de la capacité 59 est reliée à la terre. Il règne donc aux bornes du circuit composé de la résistance 58 et de la capacité 59 la même tension qu'aux bornes du circuit comportant le transistor $T_1$, la phase A, le transistor $T_2$ ainsi que la résistance 11.

La sortie 60 de l'amplificateur 51 est reliée à l'entrée non-inverseuse de l'amplificateur 52, dont la sortie est reliée à son tour à la porte de transmission 56. La sortie de cette porte de transmission 66 est reliée à l'entrée non inverseuse de l'amplificateur 53, monté en suiveur de tension. Une capacité 62 est également connectée entre l'entrée non inverseuse de l'amplificateur 53 et la terre et permet, avec l'aide de la porte de transmission 66, d'échantillonner le signal à la sortie de l'amplificateur 52 et de le mémoriser dans la capacité 62. Les signaux 64 et 65, commandant l'ouverture des portes 57 et 66, provenant du circuit 63, seront décrits en détail plus loin.

On va maintenant expliquer à l'aide de la figure 11 le fonctionnement du circuit de mesure 10. La courbe 70 de cette figure montre le signal $U_{56}$ obtenu à la sortie de l'amplificateur de mesure 50, proportionnel au courant parcourant la phase A. Ce courant $i_a$ répond par ailleurs à la relation:

$$U_{a1} = R_a \cdot i_a + L \cdot \frac{di_a}{dt} + U_{ma} \qquad (29)$$

$U_{a1}$ correspond à la tension appliquée à la phase et aux éléments en série avec celle-ci, $R_a$ la résistance totale associée à cette phase et L son inductance. $U_{ma}$ désigne la tension induite de mouvement présente dans la phase, inconnue à priori et que l'on se propose de mesurer. La courbe 71 à la figure 11 représente l'allure qu'aurait le courant $i_a$ si la tension induite $U_{ma}$ était nulle à partir de l'instant $t_o$. Dans ce cas, le courant serait régi par l'équation:

$$U_{a1} = R_a \cdot i_o + L \cdot \frac{di_o}{dt} \qquad (30)$$

et dont la solution consiste en une croissance exponentielle du courant $i_o$ vers la valeur asymptotique $U_{a1}/R_a$. La courbe 71 représente également la tension qui existerait aux bornes de la capacité 59 si la porte de transmission 57 avait été conductrice jusqu'à $t_o$ et bloquée par la suite.

La tension $U_{61}$ à la sortie de l'amplificateur différentiel 52 correspond à la différence des tensions $U_{60}$ et $U_{59}$, et est donc nulle tant que les courbes 70 et 71 coïncident, ce qui est le cas lorsque la porte de transmission 57 est conductrice.

Nous allons montrer maintenant que la tension induite de mouvement $U_{ma}$, présente dans la phase A à l'instant $t_o$ où la porte de transmission 57 passe de l'état conducteur à l'état bloqué a proportionnelle à l'écart des courbes 70 et 71, mesuré un court instant dt après $t_o$.

Supposons tout d'abord que la tension induite $U_{ma}$ varie suffisament lentement dans le temps pour que l'on puisse la considérer constante pendant l'intervalle de temps compris entre $t_o$ et $t_o+dt$, et désignons par $U_{mao}$ sa valeur pendant cet intervalle. Dans ces conditions, l'équation 29 admet une solution dans l'intervalle précité qui peut être décrite par

$$i_a(t) = i_{ato} \cdot e^{-\left(\frac{t-t_o}{T_e}\right)} + \left(\frac{U_{a1}-U_{mao}}{R_a}\right) \cdot \left(1-e^{-\left(\frac{t-t_o}{T_e}\right)}\right) \quad (31)$$

où $i_{ato}$ représente la valeur du courant $i_a$ à l'instant $t_o$, et $T_e$ correspond à la constante de temps associée à la phase. Cette relation montre que le courant $i_a(t)$ converge exponentiellement à partir de la valeur $i_{ato}$ vers la valeur asymptotique $(U_{a1}-U_{mao})/R_a$, qui serait en fait la valeur atteinte par le courant en un temps infini si la tension induite $U_{ma}$ restait définitivement égale à sa valeur $U_{mao}$ à l'instant $t_o$.

Comme le courant $i_a$ dans la phase A produit une tension U56 à la sortie de l'amplificateur de mesure 50 qui vaut, par le choix du gain fait précédemment, $U56 = R_a \cdot i_a$, on peut également exprimer la valeur de la tension U56 entre $t_o$ et $t_o+dt$ par

$$U56 = R_a \cdot i_{ato} \cdot e^{-\left(\frac{t-t_o}{Te}\right)} + (U_{a1} - U_{mao}) \cdot \left(1-e^{-\left(\frac{t-t_o}{Te}\right)}\right) \quad (32)$$

La tension aux bornes du condensateur 59 peut aussi être facilement exprimée. En effet, comme la porte de transmission 57 passe de l'état conducteur à l'état bloqué, la tension U59 vaut

$$U59 = U56 = R_a \cdot i_{ato} \quad (33)$$

La tension U59 aux bornes du condensateur augmente ensuite vers la valeur asymptotique $U_{a1}$, et ceci selon la relation

$$U59 = R_a \cdot i_a \cdot e^{-\left(\frac{t-t_o}{Trc}\right)} + U_{a1} \cdot \left(1-e^{-\left(\frac{t-t_o}{Trc}\right)}\right) \quad (34)$$

$T_{rc}$ désigne la constante de temps associée au circuit comprenant la capacité 59 et la résistance 56 et vaut $T_{rc} = R59 \cdot C59$. Si la constante de temps $T_{rc}$ est choisie égale à la constante électrique $T_e$ associée à la phase, les termes exponentielsdes expressions 32 et 34 sont de même nature, et il est facile de calculer la tension U61 apparaissant à la sortie de l'amplificateur différentiel 52. Nous avons en effet:

$$U61 = U60 - U56 \qquad (35)$$

et comme $U60 = U59$ puisque l'amplificateur 51 est monté en suiveur de tension, nous pouvons calculer U60 à partir des expressions 32 et 34. Nous obtenons, après quelques calculs,

$$U61 = U_{mao} \cdot (1 - e^{\frac{(t-tc)}{Te}}) \qquad (36)$$

Si nous désirons connaître plus précisément la tension U61 à l'instant $t_0+dt$, nous pouvons remplacer l'expression exponentielle, pour autant que dt soitbeaucoup plus petit que $T_e$, par l'expression suivante:

$$( 1 - e^{-(\frac{t-to}{Te})}) = \frac{dt}{Te} \qquad (37)$$

La tension U61 à la sortie de l'amplificateur 52 à l'instant $t_0+dt$ vaudra donc

$$U61 = U_{mao} \cdot \frac{dt}{Te} \qquad (38)$$

Cette dernière relation montre clairement que la tension U61 à la sortie de l'amplificateur différentiel 52 un court instant dt après que l'on ait bloqué la porte de transmission 57 est proportionnelle à la valeur instantanée de la tension $U_{mao}$ à l'instant $t_0$. A l'instant $t_0+dt$ , on vient prélever la tension U61 en rendant conductrice pendant un très bref instant la porte de transmission 66, ce qui permet de charger la capacité 62 à la tension U61. La porte 66 est ensuite bloquée, et la tension U61 à l'instant $t_0+dt$ se trouve ainsi mémorisée jusqu'au prochain cycle de mesure . Le temps de mesure dt doit donc être choisi suffisament grand pour que la tension U61 à l'instant $t_0+dt$ soit suffisament importante, et suffisament petit pour que la condition $dt \gg Te$ soit respectée.

Le cycle de mesure de la tension induite $U_{me}$ consiste donc à rendre conductrice pendant un très bref instant la porte de transmission 57 au temps $t_0$, et à prélever la tension U61, présente un instant dt plus tard à la sortie de l'amplificateur différentiel 52, en rendant conductrice pendant un très bref instant la porte de transmission 66. A ce moment, le résultat du cycle de mesure est mémorisé dans la capacité 62, et un nouveau cycle de mesure peut être commencé. Des essais ont montré que la fréquence du cycle de mesure peut atteindre plusieurs dizaines de kHz. L'évolution de la tension induite de mouvement peut donc être fidèlement reconstituée à l'aide des nombreux échantillons obtenus aux différentes mesures.

la figure 12 montre un schéma de principe d'un exemple de réalisation du circuit 63, fournissant les signaux de commande 64 et 65, aux circuits de mesure 10 et 20. Un oscillateur 80 fournit un signal logique 83, dont la fréquence est choisie de sorte à garantir un bon fonctionnement des circuits 10 et 20. Des essais ont montré que des fréquences allant de 10 à 100 kHz permettent d'atteindre de bons résultats. La fréquence délivrée par l'oscillateur 80 n'est donc pas critique, et il est également possible d'utiliser à la place de l'oscillateur 80 d'autres signaux de fréquence fixe présents dans le système.

Le signal de fréquence fixe 83 est relié à l'entrée de la bascule monostable portant la référence 81. Cette dernière est agencée de façon que sa sortie Q, portant la référence 85, passe et reste à l'état logique "1" pendant une très brève période de 3 à 5 µs chaque fois que le signal 83 effectue une transition de "0" à "1". La sortie $\bar{Q}$ de la bascule 81, désignée par la référence 84, est reliée à l'entrée d'une deuxième bascule monostable 82, dont la sortie Q passe et reste également à l'état "1" chaque fois que le signal 84 à son entrée effectue une transition de "0" à "1". Les signaux 65 et 85, présents aux sorties Q des deux bascules sont donc constitués de très brèves impulsions à "1", de même fréquence mais décalées dans le temps.

Comme il doit s'écouler un temps dt  entre l'activation de la première porte de transmission 57 et l'activation de la deuxième porte de transmission 66, on utilisera le

signal 66 présent à la sortie de la deuxième bascule pour activer la première porte de transmission 57 (signal 64), et le signal 65 pour activer la deuxième porte de transmission 66 (signal 65). Le temps s'écoulant entre une impulsion du signal 64 et l'impulsion suivante du signal 65 correspond au temps de mesure dt.

On remarquera à la figure 10 que le circuit de mesure de la tension induite permet également de détecter cette dernière lorsque la phase A est alimentée par une tension négative. Dans ce cas, les transistors $T_2$ et $T_4$ sont conducteurs, alors que les transistors $T_1$ et $T_3$ sont bloqués. Le montage en pont de ces quatre transistors, ainsi que le emplacement de la résistance de mesure 11 font que le courant parcourant cette dernière est toujours de même signe, indépendamment de la séquence d'alimentation de la phase A. Il en résulte que la tension induite $U_{ma}$ mesurée lorsque la phase A est alimentée par une tension négative (séquence A) est inversée par rapport à la tension induite correspondant à la convention de signe de la phase A telle qu'elle est définie à la figure 10. Les signaux $U_{ma}$ et $U_{\overline{ma}}$, ainsi que les signaux $U_{mb}$ et $U_{\overline{mb}}$, représentés à la figure  , constituent la mesure du même phénomène physique dans chaque phase, avec ou sans inversion de signe suivant la séquence d'alimentation considérée.

Le mode de réalisation selon l'invention décrit plus haut montre que les circuits de mesure de la tension induite permettent de remplacer avantageusement un capteur mesurant la position du rotor du moteur. De plus, la connaissance précise de la phase de la tension induite ainsi que le contrôle de la phase du premier harmonique du courant produit par la source alimentant la phase à l'aide d'une séquence de commutation adéquate permet d'exploiter à tout instant le couple maximal pouvant être développé par le le moteur.

Le principe selon l'invention peut également être facilement appliqué à tout type de moteur dont les phases

sont alimentées séquentiellemnt par des sources commutables.

Le circuit de la figure 6 peut être effectivement utilisé pour un moteur synchrone, les phases de ce dernier étant le siège de phénomènes de tension induites identiques à ceux décrits plus haut dans le cas du moteur pas à pas.

Le procédé selon l'invention s'applique également à des moteurs du type dit à courant continu sans collecteur puisque ces derniers se différentient du moteur synchrone classique que par le dispositif permettant d'alimenter par commutation les phases statoriques, d'une manière identique à celle du mode de réalisation selon l'invention.

On remarquera enfin que le procédé de mesure de la tension induite de mouvement à partir de deux échantillons consécutifs du courant parcourant une phase possède l'avantage d'être particulièrement insensible aux perturbations provoquées par des commutations de phases pouvant avoir eu lieu avant l'instant de la mesure, contrairement à d'autre méthodes curement analogiques. Ce procédé peut donc être avantageusement utilisé pour mesurer la tension induite de mouvement dans des phases où le courant présente de nombreuses discontinuités à la suite d'une fréquence de commutation élevée.

1

REVENDICATIONS:

1. Procédé pour contrôler et optimiser le couple développé par un moteur polyphasé, comportant plusieurs phases statoriques couplées magnétiquement au rotor et des moyens pour alimenter lesdites phases statoriques, caractérisé par le fait qu'il consiste à mesurer, pour en appréhender au moins partiellement l'évolution, les tensions induites par le mouvement du rotor dans lesdites phases statoriques et à agir sur lesdits moyens d'alimentation de sorte que, pour chaque phase statorique, l'onde fondamentale de courant, de même pulsation que la tension induite, dont la circulation est produite par lesdits moyens d'alimentation présente un déphasage prédéterminé par rapport à la tension induite présente dans cette même phase.

2. Procédé selon la revendication 1, caractérisé par le fait que, pour chaque phase, ledit déphasage entre le premier harmonique du courant provoqué par lesdits moyens d'alimentation et la tension induite présente dans ladite phase est nul.

3. Procédé selon la revendication 1, caractérisé par le fait que, pour chaque phase, ledit déphasage entre le premier harmonique du courant provoqué par lesdits moyens d'alimentation correspond à 180 degrés électriques.

4. Procédé selon la revendication 1, caractérisé en ce que la mesure d'appréhension d'évolution de la tension induite dans une phase déterminée consiste à produire un premier signal, proportionnel au courant parcourant ladite phase en un premier instant, à produire un deuxième signal proportionnel au courant qui circulerait en un deuxième instant, situé après le premier instant, si la dite tension induite avait été nulle entre le premier et le deuxième instant, à produire un troisième signal, proportionnel au courant parcourant effectivement la phase au deuxième instant, et à produire un quatrième signal proportionnel à la différence entre le deuxième et le troisième signal, ce quatrième signal étant proportionnel à la tension induite de mouvement présente dans la phase considérée entre le premier et le deuxième instant.

5. Dispositif de commande pour moteur polyphasé, notamment pour la mise en oeuvre du procédé selon la revendication 1, comportant plusieurs phases statoriques couplées magnétiquement au rotor, ledit dispositif comprenant des moyens pour produire des courants dans lesdites phases, caractérisé par le fait qu'il comporte en outre des moyens pour produire des signaux de mesure d'appréhension d'évolution des tensions induites produites par le mouvement du rotor dans les différentes phases statoriques et des moyens pour modifier, pour chaque phase, le déphasage entre le premier harmonique du courant, de même pulsation que la tension induite, produit par les moyens d'alimentation, et la tension induite présente dans la phase considérée en réponse auxdits signaux de mesure.

6. Dispositif selon la revendication 5, caractérisé par le fait que les moyens pour produire les signaux de mesure d'appréhension d'évolution des tensions induites comportent, pour chaque phase considérée, des moyens pour produire un premier signal proportionnel au courant parcourant ladite phase en un premier instant, des moyens pour produire un deuxième signal proportionnel au courant qui circulerait dans ladite phase en un deuxième instant, situé après le premier instant, si la tension induite avait été nulle entre le premier et le deuxième instant, des moyens pour produire un troisième signal proportionnel au courant parcourant effectivement la phase au deuxième instant, et des moyens pour produire un quatrième signal proportionnel à la différence entre le deuxième et le troisième signal, ce quatrième signal étant proportionnel à la tension induite de mouvement présente dans la phase considérée entre le premier et le deuxième instant.

FIG. 1

FIG. 2

FIG. 3

FIG. 4

FIG. 5

FIG. 6

FIG. 8

FIG. 7

FIG. 9

FIG. 10

FIG. 11

FIG. 12

FIG. 13